# EUROPEAN PATENT APPLICATION

(11) **EP 2 151 464 A1**
(43) Date of publication of application: **10.02.2010**
(21) Application number: 08764900.0
(22) Date of filing: 30.05.2008
(51) Int. Cl.: C08G 63/692, C08L 67/04, C08L 101/16

(54) **PHOSPHONIUM SULFOISOPHTHALATE STRUCTURE-COPOLYMERIZED LACTIC ACID-BASED RESIN**

(30) Priority: 30.05.2007 JP 2007143205
(71) Applicant: Toyo Boseki Kabushiki Kaisha, Kita-ku Osaka-shi Osaka 530-8230 (JP)
(72) Inventor: MIYAMOTO, Takashi, Osaka-shi Osaka 530-8230 (JP)
(74) Representative: Weber, Thomas
(86) International application number: PCT/JP2008/059982
(87) International publication number: WO 2008/146905

(57) **Abstract**

[Object] The present invention aims to enhance the resistance of a coated film to hydrolysis while the dispersibility of the lactic acid type resin is still maintained.

[Constitution] A copolymerized lactic acid type resin containing not less than 90% by weight of a lactic acid residue where the molar ratio (L/D) of L-lactic acid to D-lactic acid is within a range of 1 to 9 and further containing a phosphonium sulfoisophthalate structure represented by the following formula [I] in a concentration of 10 to 100 eq/10⁶ g in the resin. (M is a structure represented by the following formula [II].) (R¹ to R⁴ may be same or different and each of them is a hydrocarbon group having 1 to 18 carbon(s).)

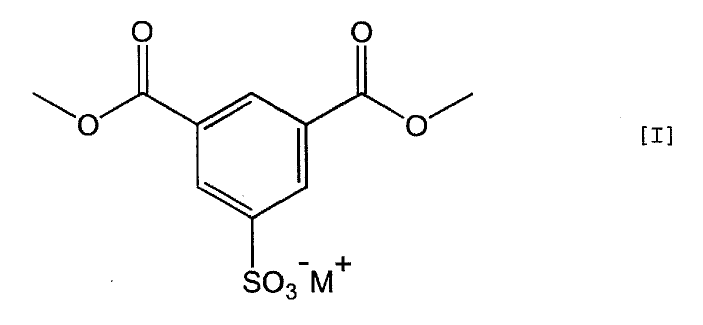

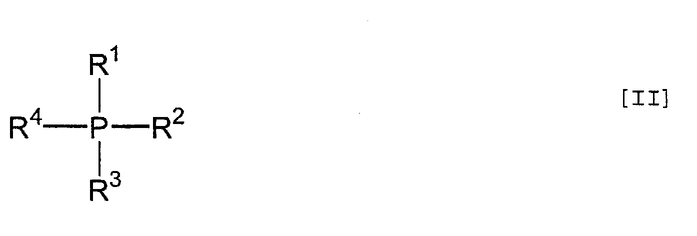

## Description

### Technical Field of the Invention

The present invention relates to resin of a copolymerized lactic acid type having biodegradability which is useful for paints, coating materials, inks, etc. The present invention is to enhance the dispersibility of inorganic pigments, coloring pigments, fillers, etc. by copolymerization of polyester of a lactic acid type with phosphonium sulfoisophthalate structure.

### Background Art

As a result of an increase in consciousness to environmental problems in recent years, development in commercial products utilizing biodegradable synthetic materials using natural crude materials or biomass materials has been briskly carried out. Since the resin of a lactic acid type is also a resin where lactic acid prepared by fermentation of biomass materials is utilized as a synthetic material, development for its various uses has been carried out as well (for example, please see Patent Document 1).

The lactic acid type resin as such has been used in various fields and, when its application to paints, coating materials, inks, etc. is taken into consideration, it is necessary to disperse inorganic pigments, coloring pigments, fillers, etc. into the lactic acid type resin and, for example, there have been proposals for a lactic acid type resin copolymerized with metal sulfonate (Patent Document 2) and also for a lactic acid type resin where divalent metal salt such as calcium lactate is copolymerized (Patent Document 3). Although those resins exhibit a good dispersibility for pigments, they have a disadvantage that resistance of a coated film to hydrolysis is bad and there has been a demand for its improvement.

### (Patent Documents)

1. Japanese Patent Application Laid-Open (JP-A) No. 92518/96
2. Japanese Patent (JP-B) No. 3680988
3. Japanese Patent Application Laid-Open (JP-A) No. 2002-69352

### Disclosure of the Invention

### Problem that the Invention is to Solve

An object of the present invention is to enhance the resistance of a coated film to hydrolysis while the dispersibility of the already-known lactic acid type resin is still maintained.

### Means for Solving the Problem

In view of the above, the present inventors have found that, when a phosphonium sulfoisophthalate structure is introduced into a lactic acid type resin, dispersibility of inorganic pigments, coloring pigments, fillers, etc. is now available and, at the same time, resistance to hydrolysis is significantly improved whereupon they have accomplished the present invention.

Thus, the present invention is as follows.
(1) A copolymerized lactic acid type resin containing not less than 90% by weight of a lactic acid residue where the molar ratio (L/D) of L-lactic acid to D-lactic acid is within a range of 1 to 9 and further containing a phosphonium sulfoisophthalate structure represented by the following formula [I] in a concentration of 10 to 100 eq/10⁶ g in the resin: 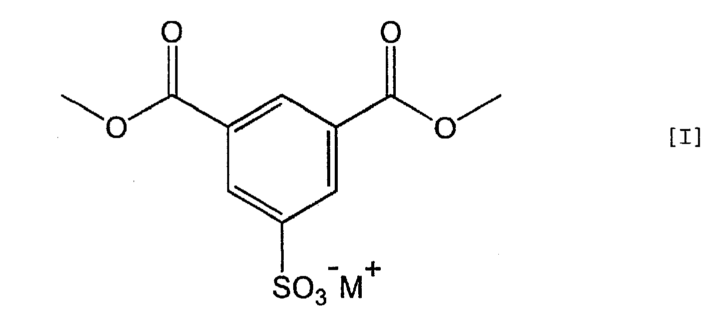 (wherein M is a structure represented by the following formula [II].) 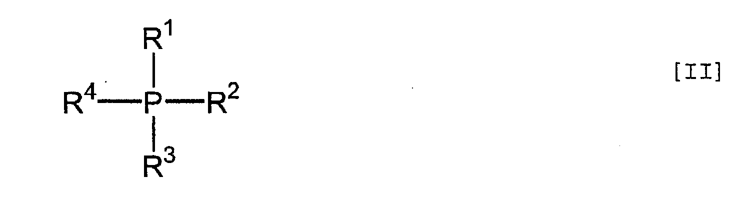 (wherein R¹ to R⁴ may be same or different and each of them is a hydrocarbon group having 1 to 18 carbon(s).)
(2) A product in which copolymerized lactic acid type resin is dissolved where said product comprises the lactic acid type resin mentioned in (1) and a solvent.

(3) A copolymerized lactic acid type resin composition where a pigment is dispersed in the resin-dissolved product mentioned in (2).

(4) An aqueous dispersion of a copolymerized lactic acid type resin containing the lactic acid type resin mentioned in (1), water and a surfactant.

(5) A copolymerized lactic acid type resin composition where a pigment is dispersed in the aqueous dispersion of a copolymerized lactic acid type resin mentioned in (4).

### Advantages of the Invention

In the copolymerized lactic acid type resin in accordance with the present invention, it is now possible that both dispersibility of pigment and resistance to hydrolysis are available and said resin is useful for the uses such as paints, coating materials and inks.

### Best Mode for Carrying Out the Invention

It is necessary that the copolymerized lactic acid type resin in the present invention contains not less than 90% by weight or, preferably, not less than 95% by weight of lactic acid residue. When the amount is less than 90% by weight, good biodegradability and film strength may not be achieved.

It is also necessary that, in the copolymerized lactic acid type resin in the present invention, the molar ratio (L/D) of L-lactic acid to the D-lactic acid is within a range of from 1 to 9 or, preferably, from 1 to 5.6. Here, the expression reading "the molar ratio (L/D) of L-lactic acid to the D-lactic acid is within a range of from 1 to 9" means that (L-lactic acid) : (D-lactic acid) is (90 to 50) : (10 to 50) (in terms of molar ratio). When L/D is more than 9, solubility of the resin in a commonly used solvent becomes bad and it is not possible to use as a coating material for paints, inks, etc. When L/D is less than 1 (where D-lactic acid is excessive), cost for the material becomes high. As to the lactic acid, any of L-lactic acid, D-lactic acid, DL-lactic acid and a dimer (lactide) thereof may be used.

It is necessary that the copolymerized lactic acid type resin of the present invention has a phosphonium sulfoisophthalate structure represented by the following formula [I] in its molecule. The phosphonium sulfoisophthalate structure is able to greatly enhance the dispersibility and the resistance to hydrolysis of inorganic pigments, coloring pigments, fillers, etc. 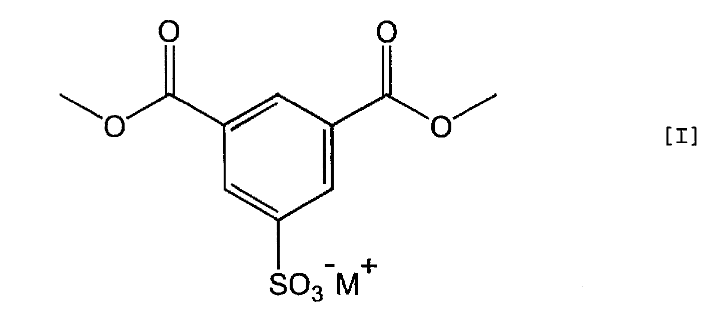 (wherein M is a structure represented by the following formula [II].) 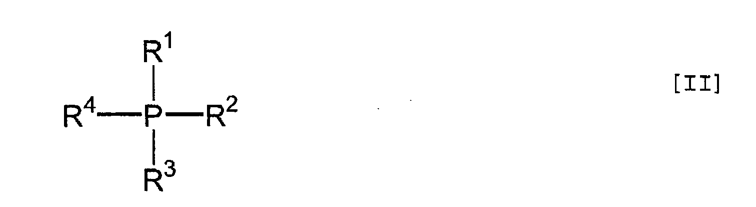 (wherein R¹ to R⁴ may be same or different and each of them is a hydrocarbon group having 1 to 18 carbon(s).)

It is necessary that the phosphonium sulfoisophthalate structure is copolymerized within a concentration range of 10 to 100 eq/10⁶ g. When it is less than 10 eq/10⁶ g, good pigment dispersibility may not be achieved while, when it is more than 100 eq/10⁶ g, viscosity of the resin solution becomes too high and good coating suitability and resistance to hydrolysis in paints, inks, etc. may not be achieved. Incidentally, the unit of eq/10⁶ g shows that how many (what equivalent) of the phosphonium sulfoisophthalate structures are present per 10⁶ g of the resin.

Although there is no particular limitation for a method of introducing the phosphonium sulfoisophthalate structure into the copolymerized lactic acid type resin, there may be exemplified a method where lactide (lactic acid dimer) is subjected to ring-opening polymerization using a compound having hydroxyl group and phosphonium sulfoisophthalate structure as an initiator and a method where phosphonium sulfoisophthalate and lactic acid are directly subjected to a polycondensation. Among the above, a method where a ring-opening polymerization is conducted is preferred.

In the phosphonium sulfoisophthalate unit represented by the formula [I], it is necessary that each of R¹ to R⁴ of the phosphonium constituting the cationic moiety thereof is a hydrocarbon group having 1 to 18 carbon (s). When the carbon numbers are more than 18, there is a tendency that dispersibility of the pigment lowers. Specific examples thereof include 1) phosphonium having an aliphatic hydrocarbon group such as tetramethyl phosphonium, tetraethyl phosphonium, tetrabutyl phosphonium, triethylmethyl phosphonium, tributylmethyl phosphonium, tributylethyl phosphonium, trimethylbutyl phosphonium, triethyloctyl phosphonium, tributyloctyl phosphonium, trimethyllauryl phosphonium, and trimethylstearyl phosphonium, 2) phosphonium having an aromatic hydrocarbon group such as tetraphenyl phosphonium, triphenylmethyl phosphonium, and triphenylethyl phosphonium and 3) phosphonium having an aralkyl group or an alkylaryl group such as triphenylbenzyl phosphonium, tritoluylbutyl phosphonium, and tributylbenzyl phosphonium. Among them, tetrabutyl phosphonium is advantageous in view of dispersibility of pigments.

Although there is no particular limitation for a process of producing a phosphosulfoisophthalate compound having a hydroxyl group, it is easy and convenient to utilize a condensation reaction of a dihydric alcohol with phosphosulfoisophthalic acid. Examples of the dihydric alcohol include ethylene glycol, 1,2-propylene glycol, 1,3-propanediol, 1,4-butanediol, neopentyl glycol, 1,6-hexanediol, and 1,4-cyclohexanedimethanol and the use of ethylene glycol is advantageous in terms of cost.

Reducing viscosity of the copolymerized lactic acid type resin in the present invention is preferred to be within a range of 0.3 to 1.5 dl/g. When the reducing viscosity is less than 0.3 dl/g, properties of the film lower and there may cause a problem when the resin is used for paints, inks, etc. When the reducing viscosity is too high, solution viscosity of paints, inks, etc. increases and good coating suitability may not be achieved. Incidentally, the reducing viscosity is a value measured by using an Ubbelohde' s viscometer under such a condition where a sample concentration is 0.125 g/25 ml, a measuring solvent is chloroform and a measuring temperature is 25°C.

Besides lactic acid, said copolymerized lactic acid type resin may also use a compound having a biodegradability including an oxyacid type compound other than lactic acid, a dicarboxylic acid such as succinic acid, a diol such as propylene glycol and a polyol compound such as glycerol within a range of less than 10% by weight.

Examples of the oxyacid other than lactic acid include glycolic acid, caprolactone, 2-hydroxyisobutyric acid, 3-hydroxyisobutyric acid, 4-hydroxyisobutyric acid, 16-hydroxyhexadecanoic acid, 2-hydroxy-2-methylbutyric acid, 10-hydroxystearic acid, malic acid, citric acid and gluconic acid.

Tg of the copolymerized lactic acid type resin in the present invention is preferably 35 to 60°C, and more preferably 40 to 55°C. When it is within a range of 35 to 60°C, good film properties are achieved. Tg is able to be adjusted by, for example, changing the rate of the copolymerizing components in the copolymerized lactic acid type resin. Incidentally, said Tg is a value measured by a DSC (differential scanning calorimetry) method.

There is no particular limitation for a process of producing the copolymerized lactic acid type resin of the present invention but any of known methods may be used. Examples thereof include a method where a lactide which is a dimer of lactic acid and a compound having a hydroxyl group and a phosphonium sulfoisophthalate structure are used as ring-opening polymerization initiators and subjected to a ring-opening polymerization under heating using a known ring-opening catalyst (such as octyl tin or aluminum acetylacetonate) and a method where a direct dehydrating polycondensation is carried out under heating *in vacuo.*

When the copolymerized lactic acid type resin of the present invention is dissolved in a solvent, a product in which the resin is dissolved therein is prepared. This dissolved product is useful as a coating agent. Examples of the solvent include an ester type solvent such as ethyl acetate, propyl acetate or butyl acetate, a ketone type solvent such as methyl ethyl ketone or cyclohexanone, an aromatic solvent such as toluene or xylene and an alcohol solvent such as isopropyl alcohol and it is preferred to use a solvent derived from biomass.

When the pigment is dispersed using the above resin-dissolved product, its utilization as paints, coating agents or inks is now possible. With regard to the pigment, there is no particular limitation so far as it is a commonly used one such as ink pigment or painting pigment and examples thereof include titanium oxide, calcium carbonate, barium sulfate, yellow iron oxide, red iron oxide, carbon black, aluminum powder, mica, titanium powder and phthalocyanine. Either one of them or two or more thereof may be used.

It is also possible that the copolymerized lactic acid type resin of the present invention is made into an aqueous dispersion using water and a surfactant and the resulting aqueous dispersion is also useful in the coating use. As to a method for preparing an aqueous dispersion of the copolymerized lactic acid type resin in the present invention, it is preferred to use, for example, a method where surfactant and water are added to a product in which the resin is dissolved in the solvent and stirred and, after that, the solvent is evaporated by conducting heating and/or vacuating so as to give an emulsion although the present invention is not particularly limited thereto.

Examples of the surfactant used for enhancing the dispersibility in water in the present invention include anionic surfactant, cationic surfactant, amphoteric surfactant, nonionic surfactant, high-molecular surfactant, polyvinyl alcohol, cationic polymer and anionic polymer and, among them, the use of polyvinyl alcohol is preferred and the joint use of polyvinyl alcohol with anionic or cationic high-molecular surfactant is more preferred. The use of polyvinyl alcohol where the saponification degree is not less than 95 molar % is particularly preferred. When the degree of saponification is 98% or more, resistance to water is further enhanced and is preferred. Moreover, a modified polyvinyl alcohol containing 1 to 20 molar % of α-olefin unit where carbon numbers are not more than 4 is more preferred. Amount of the surfactant used is preferably 1 to 10% by weight to the lactic acid type resin.

Even when a pigment is dispersed in the above aqueous dispersion, the copolymerized lactic acid type resin of the present invention also achieves an excellent dispersibility. There is no particular limitation for the pigment but, for example, any of the above-mentioned ones may be used.

Other additives such as thickener, surface smoothing agent, releasing agent, water repellant, rust preventer or fluidity adjusting agent may also be added to the product in which the copolymerized lactic acid type resin is dissolved in a solvent or to the aqueous dispersion of said resin in the present invention.

### Examples

Hereinafter, the present invention will be further specifically illustrated in the following Examples although the present invention is not limited thereto.

### Example 1

### Preparation of ethylene glycol tetrabutylphosphonium sulfoisophthalate:

TBS-318 (a solution of tetrabutylphosphonium isophthalic acid in ethylene glycol) manufactured by Takemoto Yushi K. K. was dropped into ethyl acetate and the separated out thing therefrom was filtered and dried to give ethylene glycol ester of tetrabutylphosphonium sulfoisophthalate.

### Polymerization of lactic acid type resin (A):

L-Lactide (600 g), 400 g of DL-lactide, 12 g of ethylene glycol ester of tetrabutylphosphonium sulfoisophthalate and 250 mg of tin octylate were added to a flask, heated at 180°C in a nitrogen atmosphere and subjected to a ring-opening polymerization under heating for 2 hours and, after that, unreacted monomer was evaporated *in vacuo* to give a lactic acid type resin (A). Result of the analysis is shown in Table 1.

### Dissolution of the lactic acid type resin (A) in a solvent:

The above resin (400 g) and 600 g of ethyl acetate were added to a flask and heated with stirring at 60°C for 5 hours to give a product in which the lactic acid type resin was dissolved (A).

### Dispersion of pigment into the product in which the lactic acid type resin was dissolved:

The product in which the lactic acid type resin was dissolved (A) (800 g) and 200 g of carbon black were dispersed in a ball mill to give a polylactic acid ink of an organic solvent type (A).

### Dispersion of the lactic acid type resin (A) into water:

The product in which the lactic acid type resin was dissolved (A) (500 g) was charged into a flask, 300 g of aqueous solution in which 10 g of polyvinyl alcohol was dissolved was added thereto with stirring, the mixture was stirred at 30°C for 1 hour and ethyl acetate was evaporated therefrom by heating *in vacuo* to give an aqueous dispersion of the lactic acid type resin (A).

### Dispersion of pigment into the aqueous dispersion of polylactic acid type (A):

The above aqueous dispersion of the polylactic acid type (A) and 200 g of carbon black were dispersed in a ball mill to give an aqueous polylactic acid ink (A).

### Example 2

### Polymerization of lactic acid type resin (B):

L-Lactide (600 g), 400 g of DL-lactide, 24 g of ethylene glycol ester of tetrabutylphosphonium sulfoisophthalate and 250 mg of tin octylate were added to a flask, heated at 180°C in a nitrogen atmosphere and subjected to a ring-opening polymerization under heating for 2 hours and, after that, unreacted monomer was evaporated *in vacuo* to give a lactic acid type resin (B). Result of the analysis is shown in Table 1.
In the lactic acid type resin (B), the same treatment as in Example 1 was also conducted to give a product in which the lactic acid type resin was dissolved (B), an ink of an organic solvent type (B), an aqueous dispersion of the lactic acid type resin (B) and an aqueous polylactic acid ink (B) as well.

### Example 3

### Polymerization of lactic acid type resin (C):

DL-Lactide (1000 g), 12 g of ethylene glycol ester of tetrabutylphosphonium sulfoisophthalate and 250 mg of tin octylate were added to a flask, heated at 180°C in a nitrogen atmosphere and subjected to a ring-opening polymerization under heating for 2 hours and, after that, unreacted monomer was evaporated *in vacuo* to give a lactic acid type resin (C). Result of the analysis is shown in Table 1.
In the lactic acid type resin (C), the same treatment as in Example 1 was also conducted to give a product in which the lactic acid type resin was dissolved (C), an ink of an organic solvent type (C), an aqueous dispersion of the lactic acid type resin (C) and an aqueous polylactic acid ink (C) as well.

### Example 4

### Polymerization of lactic acid type resin (D):

L-Lactide (600 g), 350 g of DL-lactide, 50 g of caprolactone, 12 g of ethylene glycol ester of tetrabutylphosphonium sulfoisophthalate and 250 mg of tin octylate were added to a flask, heated at 180°C in a nitrogen atmosphere and subjected to a ring-opening polymerization under heating for 2 hours and, after that, unreacted monomer was evaporated *in vacuo* to give a lactic acid type resin (D). Result of the analysis is shown in Table 1.
In the lactic acid type resin (D), the same treatment as in Example 1 was also conducted to give a product in which the lactic acid type resin was dissolved (D), an ink of an organic solvent type (D), an aqueous dispersion of the lactic acid type resin (D) and an aqueous polylactic acid ink (D) as well.

### Comparative Example 1

### Polymerization of lactic acid type resin (E):

L-Lactide (600 g), 400 g of DL-lactide, 8 g of ethylene glycol ester of sodium sulfonate isophthalate and 250 mg of tin octylate were added to a flask, heated at 180°C in a nitrogen atmosphere and subjected to a ring-opening polymerization under heating for 2 hours and, after that, unreacted monomer was evaporated *in vacuo* to give a lactic acid type resin (E). Result of the analysis is shown in Table 1.
In the lactic acid type resin (E), the same treatment as in Example 1 was also conducted to give a product in which the lactic acid type resin was dissolved (E), an ink of an organic solvent type (E), an aqueous dispersion of the lactic acid type resin (E) and an aqueous polylactic acid ink (E) as well.

### Comparative Example 2

### Polymerization of lactic acid type resin (F):

L-Lactide (600 g), 400 g of DL-lactide, 1 g of ethylene glycol and 250 mg of tin octylate were added to a flask, heated at 180°C in a nitrogen atmosphere and subjected to a ring-opening polymerization under heating for 2 hours and, after that, unreacted monomer was evaporated *in vacuo* to give a lactic acid type resin (F). Result of the analysis is shown in Table 1.
In the lactic acid type resin (F), the same treatment as in Example 1 was also conducted to give a product in which the lactic acid type resin was dissolved (F), an ink of an organic solvent type (F), an aqueous dispersion of the lactic acid type resin (F) and an aqueous polylactic acid ink (F) as well.

### Comparative Example 3

### Polymerization of lactic acid type resin (G):

L-Lactide (600 g), 400 g of DL-lactide, 3 g of ethylene glycol ester of tetrabutylphosphonium sulfoisophthalate and 250 mg of tin octylate were added to a flask, heated at 180°C in a nitrogen atmosphere and subjected to a ring-opening polymerization under heating for 2 hours and, after that, unreacted monomer was evaporated *in vacuo* to give a lactic acid type resin (G). Result of the analysis is shown in Table 1.
In the lactic acid type resin (G), the same treatment as in Example 1 was also conducted to give a product in which the lactic acid type resin was dissolved (G), an ink of an organic solvent type (G), an aqueous dispersion of the lactic acid type resin (G) and an aqueous polylactic acid ink (G) as well.

### Comparative Example 4

### Polymerization of lactic acid type resin (H):

L-Lactide (600 g), 400 g of DL-lactide, 60 g of ethylene glycol ester of tetrabutylphosphonium sulfoisophthalate and 250 mg of tin octylate were added to a flask, heated at 180°C in a nitrogen atmosphere and subjected to a ring-opening polymerization under heating for 2 hours and, after that, unreacted monomer was evaporated *in vacuo* to give a lactic acid type resin (H). Result of the analysis is shown in Table 1.
In the lactic acid type resin (H), the same treatment as in Example 1 was also conducted to give a product in which the lactic acid type resin was dissolved (H), an ink of an organic solvent type (H), an aqueous dispersion of the lactic acid type resin (H) and an aqueous polylactic acid ink (H) as well.

### Comparative Example 5

### Polymerization of lactic acid type resin (I):

L-Lactide (850 g), 150 g of DL-lactide, 12 g of ethylene glycol ester of tetrabutylphosphonium sulfoisophthalate and 250 mg of tin octylate were added to a flask, heated at 180°C in a nitrogen atmosphere and subjected to a ring-opening polymerization under heating for 2 hours and, after that, unreacted monomer was evaporated *in vacuo* to give a lactic acid type resin (I). Result of the analysis is shown in Table 1.
Dissolution of the lactic acid type resin (I) in ethyl acetate by the same method as in Example 1 was attempted but the solubility was bad and stable resin solution was unable to be prepared.

Printing on a polylactic acid film by a gravure printer was conducted using the inks of an organic solvent type prepared in the above Examples and Comparative Examples whereupon a printed film was prepared. The resulting printed film was subjected to an evaluation for ink properties (dispersibility of pigment, stabilityof ink, printing property, adhesive property and resistance to hydrolysis). Result of the evaluation is shown in Table 2.
Evaluating items other than dispersibility of pigment were conducted by means of a five-stage evaluation.
Result of the evaluation was expressed as 5 (very good) to 1 (bad). 4 and higher are within a practical level.

Dispersibility of pigment: Dispersibility of pigment was evaluated using a gloss-meter.
Stability of ink: Changes of ink with elapse of time were checked by naked eye and degrees of pigment separation and of sedimentation were evaluated.
Printing property: Gravure printing was conducted onto a polylactic acid film and the outcome whether the repelling was available, etc. was evaluated by naked eye.
Adhesive property: The film was cut into grids and a tightly adhesive property was evaluated by means of release of Cellotape (registered trade mark) therefrom.
Resistance to hydrolysis: The printed film was allowed to stand for 100 hours in an environment of 40°C and 80% RH and was evaluated by conducting the above adhesive property evaluation.

**[Table 1]**

| | Concentration of ionic group (eq/10⁶g) | L-lactic acid / D-lactic acid (molar ratio) | Reducing viscosity (dl/g) | Lactic acid residue (wt %) |
|---|---|---|---|---|
| Lactic acid type resin (A) | 24 | 4 | 0.55 | 98.7 |
| Lactic acid type resin (B) | 48 | 4 | 0.45 | 97.4 |
| Lactic acid type resin (C) | 24 | 1 | 0.54 | 98.7 |
| Lactic acid type resin (D) | 24 | 5.17 | 0.53 | 94.1 |
| Lactic acid type resin (E) | 24 | 4 | 0.53 | 99.1 |
| Lactic acid type resin (F) | 0 | 4 | 0.55 | 99.9 |
| Lactic acid type resin (G) | 6 | 4 | 0.53 | 99.7 |
| Lactic acid type resin (H) | 120 | 4 | 0.41 | 93.5 |
| Lactic acid type resin (I) | 24 | 12.3 | 0.53 | 98.7 |

**[Table 2]**

| | | Dispersibility of pigment evaluated using a gloss-meter (%) | Stability of ink | Printing property | Adhesive property | Resistance to hydrolysis |
|---|---|---|---|---|---|---|
| Example 1 | ink (A) | 80 | 5 | 5 | 5 | 5 |
| Example 2 | ink (B) | 90 | 5 | 5 | 5 | 4 |
| Example 3 | ink (C) | 80 | 5 | 5 | 5 | 5 |
| Example 4 | ink (D) | 80 | 5 | 5 | 5 | 5 |
| Comparative Example 1 | ink (E) | 80 | 5 | 5 | 5 | 2 |
| Comparative Example 2 | ink (F) | 40 | 1 | 1 | 5 | 5 |
| Com parative Example 3 | ink (G) | 60 | 2 | 3 | 4 | 5 |
| Comparative Example 4 | ink (H) | 90 | 5 | 4 | 4 | 3 |
| Comparative Example 5 | unable to be prepared | - | - | - | - | - |

### Industrial Applicability

As mentioned hereinabove, in the lactic acid type resin in accordance with the present invention, both dispersibility of pigment and resistance to hydrolysis are able to be achieved and the resin is useful for the uses such as paints, coating materials and inks.

## Claims

1. A copolymerized lactic acid type resin containing not less than 90% by weight of a lactic acid residue where the molar ratio (L/D) of L-lactic acid to D-lactic acid is within a range of 1 to 9 and further containing a phosphonium sulfoisophthalate structure represented by the following formula [I] in a concentration of 10 to 100 eq/10⁶ g in the resin: 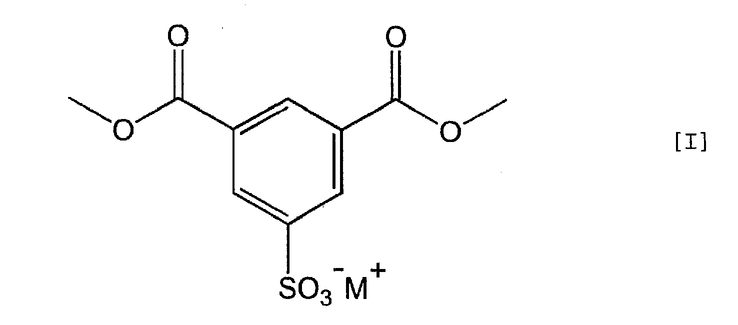 (wherein M is a structure represented by the following formula [II].) 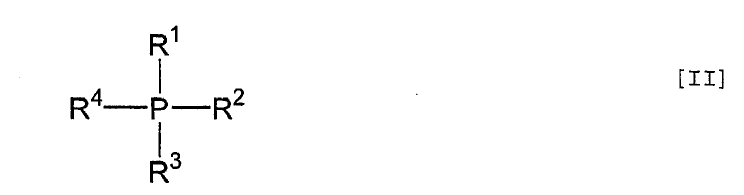 (wherein R¹ to R⁴ may be same or different and each of them is a hydrocarbon group having 1 to 18 carbon(s).)

2. A product in which copolymerized lactic acid type resin is dissolved where said product comprises the lactic acid type resin according to claim 1 and a solvent.

3. A copolymerized lactic acid type resin composition where a pigment is dispersed in the resin-dissolved product according to claim 2.

4. An aqueous dispersion of a copolymerized lactic acid type resin containing the lactic acid type resin according to claim 1, water and a surfactant.

5. A copolymerized lactic acid type resin composition where a pigment is dispersed in the aqueous dispersion of the copolymerized lactic acid type resin according to claim 4.
